# EUROPÄISCHE PATENTSCHRIFT

(11) **EP 1 246 534 B1**
(45) Veröffentlichungstag und Bekanntmachung des Hinweises auf die Patenterteilung: **25.06.2003**
(21) Anmeldenummer: 00983122.3
(22) Anmeldetag: 09.11.2000
(51) Int. Cl.: A01N 53/00

(54) **VERWENDUNG EINES CYCLOPROPANCARBONSÄUREAMID-DERIVATES ZUR BEKÄMPFUNG VON SCHORF**
USE OF A CYCLOPROPANE CARBOXYLIC ACID AMIDE DERIVATIVE FOR COMBATING SCAB
UTILISATION D'UN DERIVE D'AMIDE D'ACIDE CARBOXYLIQUE CYLOPROPANOIQUE POUR LA LUTTE CONTRE LA TAVELURE

(30) Priorität: 22.11.1999 DE 19956120
(43) Veröffentlichungstag der Anmeldung: 09.10.2002
(73) Patentinhaber: Bayer CropScience AG, 40789 Monheim (DE)
(72) Erfinder: STENZEL, Klaus, 40595 Düsseldorf (DE); KRAATZ, Udo, 51375 Leverkusen (DE)
(86) Internationale Anmeldenummer: EP0011086
(87) Internationale Veröffentlichungsnummer: WO01037669

(56) Entgegenhaltungen:
- EP-A- 0 170 842
- EP-A- 0 341 475
- C. STRUCK, M. HAHN & K. MENDGEN: "Infection structures of plant pathogenic fungi-potnetial targets for plant disease control " ZTSCHR. PFLANZENKRANKH. PFLANZENSCHUTZ, Bd. 105, Nr. 6, 1998, Seiten 581-589, XP002161097

## Beschreibung

Die vorliegende Erfindung betrifft die neue Verwendung eines bekannten Cyclopropancarbonsäureamid-Derivates gegen Schorf.

Es ist bereits bekannt, dass N-(R)-[1-(4-Chlor-phenyl)-ethyl]-2,2-dichlor-1-ethyl-3t-methyl-1r-cyclopropan-carbonsäureamid (= Carpropamid) eine fungizide Wirksamkeit besitzt und sich gegen Pyricularia oryzae an Reis einsetzen läßt (vgl. EP-A 0 341 475).

Es wurde nun gefunden, dass sich N-(R)-[1-(4-Chlor-phenyl)-ethyl]-2,2-dichlor-1-ethyl-3t-methyl-1r-cyclopropan-carbonsäureamid der Formel 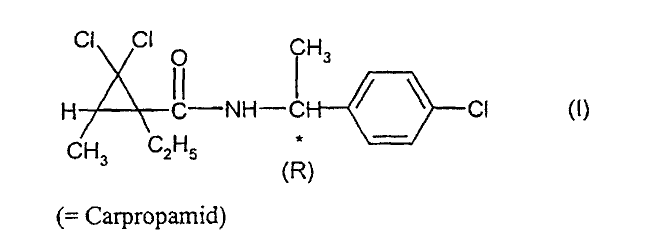 sehr gut zur Bekämpfung von Venturia-Arten verwenden läßt.

Es ist als äußerst überraschend zu bezeichnen, dass N-(R)-[1-(4-Chlor-phenyl)-ethyl]-2,2-dichlor-1-ethyl-3t-methyl-1r-cyclopropan-carbonsäureamid der Formel (I) eine hohe Wirkung gegen Venturia besitzt, denn in der Praxis war bisher nur eine Verwendung dieses Stoffes gegen Pyricularia oryzae bekannt.

Aus der Strukturformel für den Wirkstoff der Formel (I) ist ersichtlich, dass die Verbindung drei asymmetrisch substitutierte Kohlenstoffatome aufweist, wobei das Kohlenstoffatom zwischen NH-Gruppe und Phenylring in der R-Konfiguration vorliegt. Das Produkt kann daher als Gemisch von verschiedenen Isomeren oder auch in Form einer einzigen Komponente vorhanden sein. Bei den Isomeren handelt es sich um das N-(R)-[1-(4-Chlor-phenyl)-ethyl]-(1S)-2,2-dichlor-1-ethyl-3t-methyl-1r-cyclopropan-carbonsäureamid der Formel 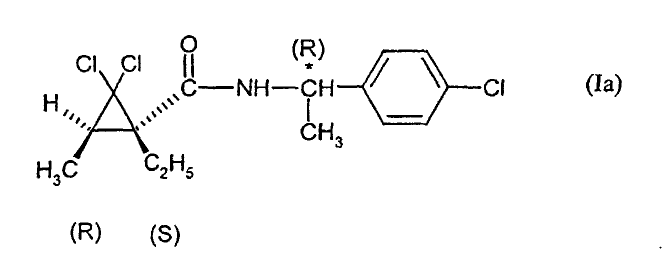 und
das N-(R)-[1-(4-Chlor-phenyl)-ethyl]-(1R)-2,2-dichlor-1-ethyl-3t-methyl-1r-cyclopropan-carbonsäureamid der Formel

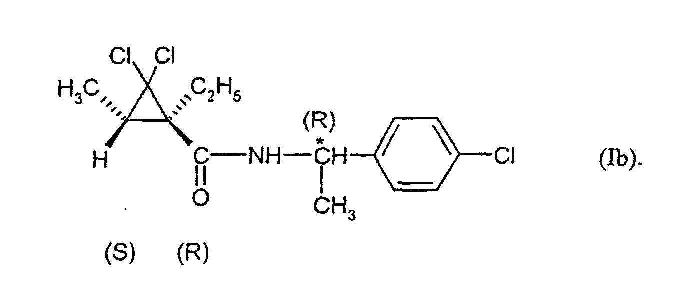

Die Verbindung der Formel (I) und deren einzelne Isomere sind bekannt (vgl. EP-A 0 341 475).

Der Wirkstoff der Formel (I) eignet sich zur Bekämpfung von Venturia-Arten an Obst, wie Äpfeln und Birnen, insbesondere zur protektiven Bekämpfung von Venturia inaequalis an Apfelbäumen.

Der Wirkstoff der Formel (I) kann in die üblichen Formulierungen überführt werden, wie Lösungen, Suspensionen, Spritzpulver, Pasten, lösliche Pulver und Granulate. Die Anwendung erfolgt bei der Bekämpfung von Venturia-Arten vorzugsweise durch Spritzapplikation. Dazu werden aus den genannten Formulierungen anwendungsfertige Spritzmittel in üblicher Weise, zum Beispiel durch Vermengen der konzentrierten Formulierungen mit Wasser, hergestellt.

Beim Einsatz des Wirkstoffes der Formel (I) zur Bekämpfung von Venturia-Arten kann die Aufwandmenge innerhalb eines bestimmten Bereiches variiert werden. Die Aufwandmengen an Wirkstoff liegen im allgemeinen zwischen 25 und 500 g/ha, vorzugsweise zwischen 75 und 300 g/ha.

Die Erfindung wird durch die folgenden Beispiele veranschaulicht.

### Beispiel 1

### Venturia-Test (Apfel) / protektiv

- Lösungsmittel:: 23,5 Gewichtsteile Aceton
23,5 Gewichtsteile Dimethylformamid
- Emulgator:: 3,0 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit werden junge Pflanzen mit der Wirkstoffzubereitung in der angegebenen Aurwandmenge besprüht. Nach Antrocknen des Spritzbelages werden die Pflanzen mit einer wässrigen Konidiensuspension des Apfelschorferregers ***Venturia inaequalis*** inokuliert und verbleiben dann 1 Tag bei ca. 20°C und 100 % relativer Luftfeuchtigkeit in einer Inkubationskabine.

Die Pflanzen werden dann im Gewächshaus bei ca. 21°C und einer relativen Luftfeuchtigkeit von ca. 90 % aufgestellt.

12 Tage nach der Inokulation erfolgt die Auswertung. Dabei bedeutet 0 % ein Wirkungsgrad, der demjenigen der Kontrolle entspricht, während ein Wirkungsgrad von 100 % bedeutet, daß kein Befall beobachtet wird.

Wirkstoff, Aufwandmenge und Versuchsergebnis gehen aus der folgenden Tabelle hervor.

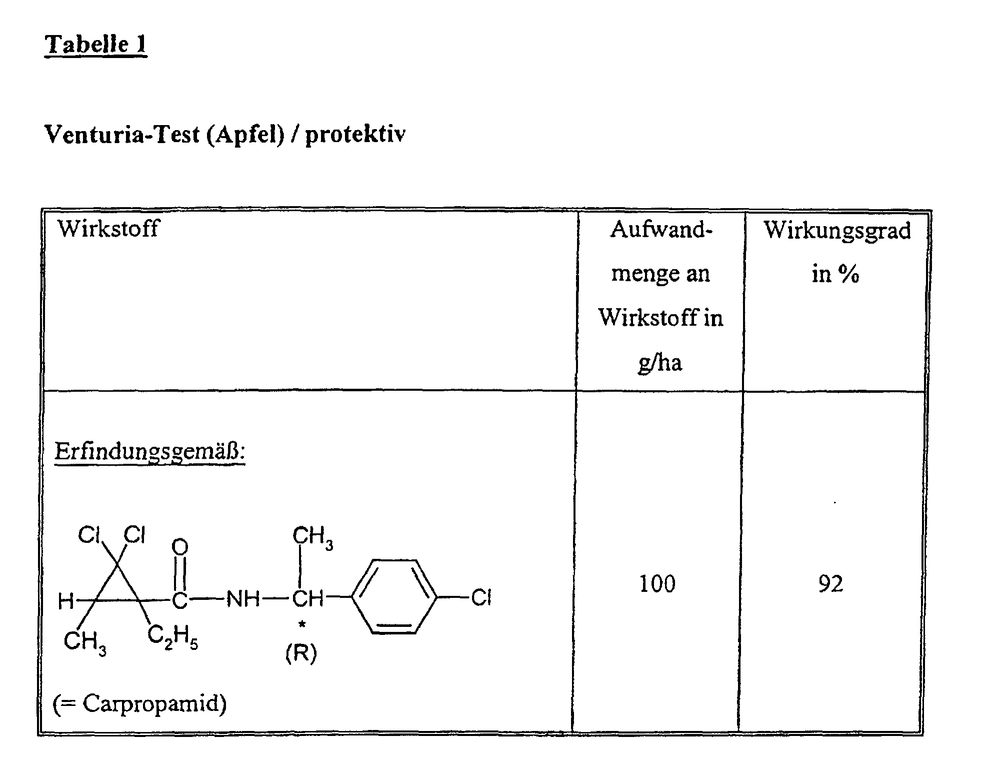

(Bei dem eingesetzten Wirkstoff handelt es sich um ein Isomerengemisch, das zu gleichen Teilen aus den Isomeren der Formeln (Ia) und (Ib) besteht).

## Patentansprüche

1. Verwendung von N-(R)-[1-(4-Chlor-phenyl)-ethyl]-2,2-dichlor-1-ethyl-3t-methyl-1r-cyclopropan-carbonsäureamid der Formel 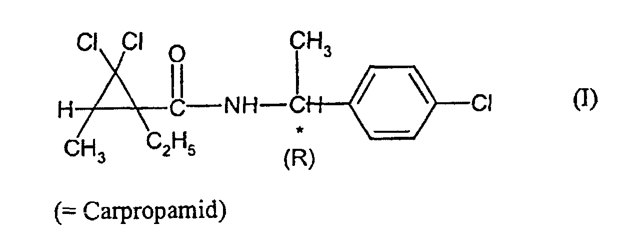 zur Bekämpfung von Venturia-Arten.

## Claims

1. Use of N-(R)-[1-(4-chlorophenyl)ethyl]-2,2-dichloro-1-ethyl-3t-methyl-1r-cyclopropanecarboxamide, of the formula 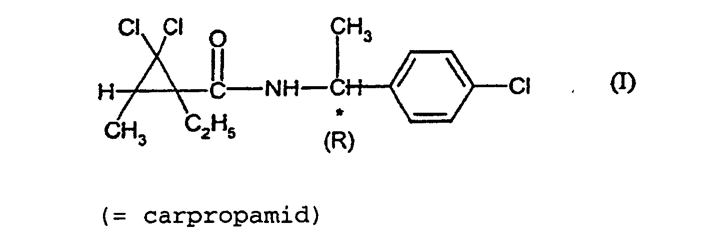 for controlling Venturia species.

## Revendications

1. Utilisation de l'amide d'acide N-(R)-(1-(4-chloro-phényl)-éthyl)-2,2-dichloro-1-éthyl-3t-méthyl-1r-cyclopropanecarboxylique répondant à la formule (I) 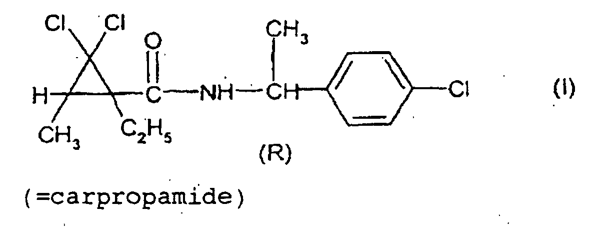 pour combattre les types de venturia.
